# EUROPEAN PATENT APPLICATION

(11) **EP 4 546 743 A1**
(43) Date of publication of application: **30.04.2025**
(21) Application number: 23826737.1
(22) Date of filing: 07.03.2023
(51) Int. Cl.: H04L 43/02, G05B 19/042, H04L 12/28, H04L 41/0686

(54) **CONTROL SYSTEM, RELAY DEVICE, AND COMMUNICATION METHOD**

(30) Priority: 21.06.2022 JP 2022099491
(71) Applicant: OMRON Corporation, Kyoto 600-8530 (JP)
(72) Inventor: NIWA, Yoshimi, Kyoto-shi, Kyoto 600-8530 (JP); MIZUMOTO, Hirohito, Kyoto-shi, Kyoto 600-8530 (JP); UEDA, Takamasa, Kyoto-shi, Kyoto 600-8530 (JP)
(74) Representative: Mewburn Ellis LLP
(86) International application number: PCT/JP2023/008544
(87) International publication number: WO 2023/248548

(57) **Abstract**

A configuration is provided that can quickly take action against a communication state of a transmission path. The configuration includes a first controller including an interface for connection to a first transmission path, a second controller including an interface for connection to a second transmission path, and a relay unit including a first interface for connection to the first transmission path and a second interface for connection to the second transmission path. The relay unit includes a detection unit configured to detect a communication state of the first transmission path. The relay unit is configured to, in accordance with a transfer setting, transmit, to the second controller, output data transmitted from the first controller, and transmit, to the second controller, first state data indicating the detected communication state of the first transmission path.

## Description

### TECHNICAL FIELD

The present invention relates to a control system, a relay device, and a communication method.

### BACKGROUND ART

The rapid development of information and communication technology in recent years has increased a need for processing more data also in industrial equipment.

More specifically, technological innovation using communication technology, represented by the Internet of Things (IoT) or Industry 4.0, is progressing. As a result, the volume of data exchanged within a system is on the rise.

As a solution to such an increase in data processing volume, WO 2013/137023 (PTL 1) discloses a configuration that allows for more appropriate update of data between devices in a configuration including a plurality of communication lines.

When a network distributed control system is configured by connecting a plurality of controllers, a relay unit is used that is a gateway responsible for data transfer between controllers. In such a network distributed control system, one controller exchanges data with any other controller via the relay unit. Such data exchange enables, for example, monitoring of a control state and control between controllers.

### CITATION LIST

### PATENT LITERATURE

PTL 1: WO 2013/137023

### SUMMARY OF INVENTION

### TECHNICAL PROBLEM

In the above network distributed control system, data exchange between controllers is achieved via the transmission path and the relay unit, and accordingly, the control performance or operating rate of the network distributed control system can fluctuate in response to changes in the communication state of the transmission path. Thus, in order to maintain the control performance or operating rate of the network distributed control system, a configuration is desired that can quickly take action against the communication state of the transmission path.

### SOLUTION TO PROBLEM

A control system according to an example of the present disclosure includes: a first controller including an interface for connection to a first transmission path; a second controller including an interface for connection to a second transmission path; and a relay unit including a first interface for connection to the first transmission path, and a second interface for connection to the second transmission path, wherein the relay unit includes a detection unit configured to detect a communication state of the first transmission path, the relay unit is configured to, in accordance with a transfer setting, transmit, to the second controller output data transmitted from the first controller, and transmit, to the second controller, first state data indicating the detected communication state of the first transmission path.

According to the control system described above, the relay unit detects the communication state of the first transmission path and transmits data on the communication state to the second controller connected to the second transmission path different from the first transmission path. Thus, the communication state of the first transmission path is notified, allowing the second controller connected to the second transmission path to be included in a device that can take action against this state.

In the control system described above, the relay unit is configured to transmit, to the second controller by cyclic communication, output data transmitted from the first controller by cyclic communication, and transmit first state data to the second controller by cyclic communication.

According to the control system described above, the relay unit transmits the communication state of the first transmission path to the second controller by cyclic communication. Thus, the communication state of the first transmission path can be notified cyclically to the second controller.

In the control system described above, the relay unit is configured to detect a recovery of the communication state indicated by the first state data.

According to the control system described above, the relay unit detects that the communication state of the first transmission path has been recovered.

In the control system described above, the relay unit is configured to stop transmitting the first state data after detecting the recovery.

According to the control system described above, the transmission of the first state data is stopped after the communication state of the first transmission path has been recovered.

In the control system described above, the first state data indicates an importance of an action against the detected communication state of the first transmission path, and the relay unit is configured to transmit, to the second controller by message communication, information indicating details of the detected communication state of the first transmission path.

According to the control system described above, the relay unit can transmit, by cyclic communication, the first state data indicating the importance of the action against the detected communication state of the first transmission path, and transmit, to the second controller by message communication, the information indicating details of the communication state.

In the control system described above, the detection unit is further configured to detect a communication state of the second transmission path, the relay unit is further configured to, in accordance with the transfer setting, transmit, to the first controller, output data transmitted from the second controller, and transmit, to the first controller, second state data indicating the detected communication state of the second transmission path.

According to the control system described above, output data can be transmitted bidirectionally between the first controller and the second controller, and data on the communication state of the transmission path connected to one of the first controller and the second controller can be transmitted to the other controller.

In the control system described above, the relay unit is configured to transmit, to the first controller by cyclic communication, output data transmitted from the second controller by cyclic communication, and transmit the second state data to the first controller by cyclic communication.

According to the control system described above, output data can be transmitted bidirectionally and cyclically between the first controller and the second controller, and data on the communication state of the transmission path connected to one of the first controller and the second controller can be transmitted cyclically to the other controller.

In the control system described above, the relay unit is configured to detect a recovery of the communication state indicated by the second state data.

According to the control system described above, the relay unit can detect that the communication state of the second transmission path has been recovered.

In the control system described above, the relay unit is configured to stop transmitting the second state data after detecting the recovery of the communication state of the second transmission path.

According to the control system described above, the transmission of the second state data is stopped after the recovery of the communication state of the second transmission path.

In the control system described above, the second state data indicates an importance of an action against the detected communication state of the second transmission path, and the relay unit is configured to transmit, to the first controller by message communication, information indicating details of the detected communication state of the second transmission path.

According to the control system described above, the relay unit can transmit, by cyclic communication, the second state data indicating the importance of the action against the detected communication state of the second transmission path, and transmit the information indicating the details of the communication to the first controller by message communication.

The control system described above provides a user interface configured to output the first state data and the second state data.

According to the control system described above, the user can be provided with the first state data indicating the communication state of the first transmission path and the second state data indicating the communication state of the second transmission path.

In the control system described above, the relay unit is configured to communicate with a communication master connected to the first transmission path via the first transmission path, and communicate with the second controller serving as a communication master via the second transmission path.

According to the control system described above, the relay unit can operate as a slave in communication via the first transmission path and communication via the second transmission path.

According to an example of the present disclosure, a relay device is connected to a first controller via a first transmission path and connected to a second controller via a second transmission path. The relay device includes: a first interface for connection to the first transmission path; a second interface for connection to the second transmission path; a detection unit configured to detect a communication state of the first transmission path; and a processing circuit configured to, in accordance with a transfer setting, transmit, to the second controller, output data transmitted from the first controller, and transmit, to the second controller, first state data indicating the detected communication state of the first transmission path.

The relay device described above detects the communication state of the first transmission path and transmits data on the communication state to the second controller connected to the second transmission path different from the first transmission path. Thus, the communication state of the first transmission path is notified, allowing the second controller connected to the second transmission path to be included in the device that can take action against the state.

According to an example of the present disclosure, a communication method is a communication method performed by a control system including a first controller including an interface for connection to a first transmission path and a second controller including an interface for connection to a second transmission path. The communication method includes: detecting a communication state of the first transmission path; transmitting, to the second controller in accordance with a transfer setting, output data transmitted from the first controller; and transmitting, to the second controller, first state data indicating the communication state of the first transmission path.

When the communication method described above is performed, upon detection of the communication state of the first transmission path, data on the detected communication state is transmitted to the second controller connected to the second transmission path different from the first transmission path. Thus, the communication state of the first transmission path is notified, allowing the second controller connected to the second transmission path to be included in the device that can take action against this state.

### ADVANTAGEOUS EFFECTS OF INVENTION

According to the present disclosure, the communication state of the first transmission path is notified to allow the second controller connected to the second transmission path different from the first transmission path to be included in the device that can take action against the state, and thus, a configuration can be provided that is capable of quickly taking action against the communication state of the transmission path.

### BRIEF DESCRIPTION OF DRAWINGS

Fig. 1 is a schematic diagram showing an application example of a control system 1 according to the present embodiment.
Fig. 2 is a schematic diagram showing an overall configuration example of control system 1 according to the present embodiment.
Fig. 3 is a block diagram showing a hardware configuration example of an arithmetic unit 100 of a main controller 10 according to the present embodiment.
Fig. 4 is a block diagram showing a hardware configuration example of an arithmetic unit 200 of a sub-controller 20 according to the present embodiment.
Fig. 5 is a block diagram showing a hardware configuration example of a relay unit 250 of sub-controller 20 according to the present embodiment.
Fig. 6 is a diagram showing an example of occurring event information 265 according to the present embodiment.
Fig. 7 is a diagram showing an example of occurring event information 265 according to the present embodiment.
Fig. 8 is a diagram showing an example of occurring event information 265 according to the present embodiment.
Fig. 9 is a schematic diagram showing an overview of data communication in control system 1 according to the present embodiment.
Fig. 10 is a schematic diagram showing an example data structure used for data communication in control system 1 according to the present embodiment.
Fig. 11 is a diagram for illustrating a process in relay unit 250 in control system 1 according to the present embodiment.
Fig. 12 is a diagram for illustrating I/O data transmission of cyclic communication in control system 1 according to the present embodiment.
Fig. 13 is a diagram showing an example data structure according to the present embodiment.
Fig. 14 is a diagram illustrating event management according to the present embodiment.
Fig. 15 is a diagram illustrating event management according to the present embodiment.
Fig. 16 is a diagram illustrating event management according to the present embodiment.
Fig. 17 is a diagram showing an example user interface according to the present embodiment.
Fig. 18 is a flowchart showing an example event information registration process by relay unit 250 according to the present embodiment.
Fig. 19 is a flowchart showing an example resolution and release process by relay unit 250 according to the present embodiment.

### DESCRIPTION OF EMBODIMENTS

Embodiments of the present invention will be described in detail with reference to the drawings. The same or corresponding components in the drawings have the same reference characters allotted, and description thereof will not be repeated.

### <A. Application Example>

First, an example scene to which the present invention is applied will be described.

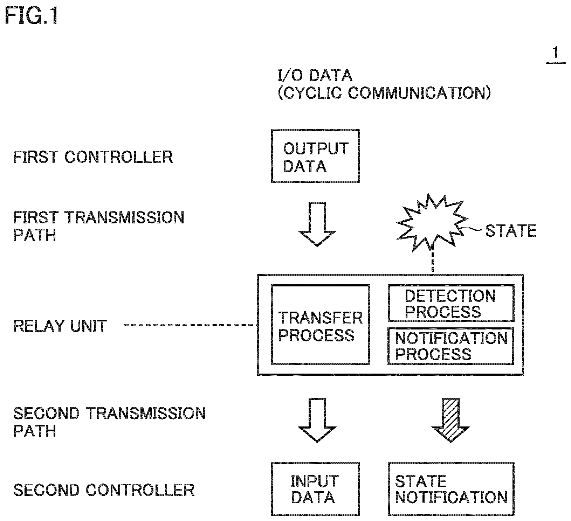

Fig. 1 is a schematic diagram showing an application example of a control system 1 according to the present embodiment. Referring to Fig. 1, control system 1 that can configure a distributed control system includes a first controller and a second controller. The first controller has an interface for connection to a first transmission path. The second controller has an interface for connection to a second transmission path.

Control system 1 further includes a relay unit having a first interface for connection to the first transmission path and a second interface for connection to the second transmission path. The relay unit has a gateway module and a module that detects the communication state of the first transmission path. The relay unit, in accordance with a transfer setting, transmits, to the second controller, output data transmitted from the first controller, and transmits, to the second controller, first state data indicating the detected communication state of the first transmission path. For example, the relay unit transmits, to the second controller by cyclic communication, the output data transmitted from the first controller by cyclic communication, and transmits the first state data to the second controller by cyclic communication. Such a relay unit is configured to enable message communication as will be described later.

Herein, to "detect a communication state of the transmission path" indicates detecting whether a specific event of a predetermined type has occurred in the transmission path or the relay unit. The specific event is not limited but includes different types of events, such as communication timeout and failed communication start. The occurrence of an event indicates that, for example, such an abnormality has occurred in the communication of the transmission path, but the event is not limited to the abnormality. The communication state of the transmission path includes a state in which the event has occurred and a state in which no event has occurred. The state in which no event has occurred is a concept that includes a recovered state in which the event which has occurred is resolved.

Herein, "cyclic communication" is a method of transmitting predetermined data in each predetermined transmission cycle (e.g., 1 msec to several hundreds of milliseconds).

Herein, "message communication" is a method of transmitting data in response to a request from a sender or a receiver. In "message communication," data may be transmitted when data transmission is requested.

The data transmitted by cyclic communication shown in Fig. 1 has a relatively high transmission priority and a relatively small data volume. In contrast, the data transmitted by message communication has a relatively low transmission priority and a relatively large data volume. In this way, in addition to cyclic communication, which is a high-frequency data exchange method, message communication, which has no time constraints, is configured to be usable.

Herein, the terms "input data" and "output data" indicate what meaning target data has, from the perspective of a controller of interest.

More specifically, "input data" refers to data that is input to the controller of interest (data that is referred to by the controller of interest). "Input data" includes, for example, a command value given by any other controller, a state value acquired by a sensor connected to any other controller, and the like.

In contrast, "output data" refers to data output from a unit of interest (data whose value is changed by the unit of interest). "Output data" includes, for example, a command value given to any other controller and/or an actuator connected to any other controller.

In the configuration example shown in Fig. 1, data is transferred from the first controller to the second controller via the relay unit. The same data can be "output data" as viewed from the first controller (sender) and "input data" as viewed from the second controller (receiver).

In the following description, "input data" and "output data" may be collectively referred to as "input/output data" or "I/O data". However, "input/output data" and "I/O data" may include only input data or only output data.

In control system 1 according to the present embodiment, whether to use cyclic communication or message communication can be set as appropriate depending on, for example, the characteristics of the data to be transmitted.

As described above, in control system 1, the relay unit not only transmits the output data transmitted from the first controller to the second controller (transfer process) but also detects the communication state of the first transmission path (detection process), and notifies the second controller of the first state data indicating the detected state (notification process). By adopting this configuration, the relay unit can transmit, to the second controller connected to the second transmission path different from the first transmission path, a "state notification" indicating the communication state of the first transmission path. This allows the second controller connected to the second transmission path to be included in the device that can take action against the event indicated by the communication state of the first transmission path. Consequently, a configuration in which the communication state of the first transmission path can be quickly transitioned to the recovered state can be provided in control system 1.

In the present disclosure, the first state data indicating the communication state of the first transmission path can be transmitted by cyclic communication or message communication, but in the present embodiment, the state data indicating the communication state of the transmission path is transmitted by cyclic communication.

In addition, the first state data indicating the communication state of the first transmission path may be transmitted to the second controller, as well as to the first controller. Similarly, the second state data indicating the communication state of the second transmission path may be transmitted to the first controller, as well as to the second controller.

Description will be given below of the detailed configuration and processes of control system 1 including the relay unit according to the present embodiment, as a more specific application example.

### <B. Overall Configuration Example>

Next, an overall configuration example of control system 1 according to the present embodiment will be described.

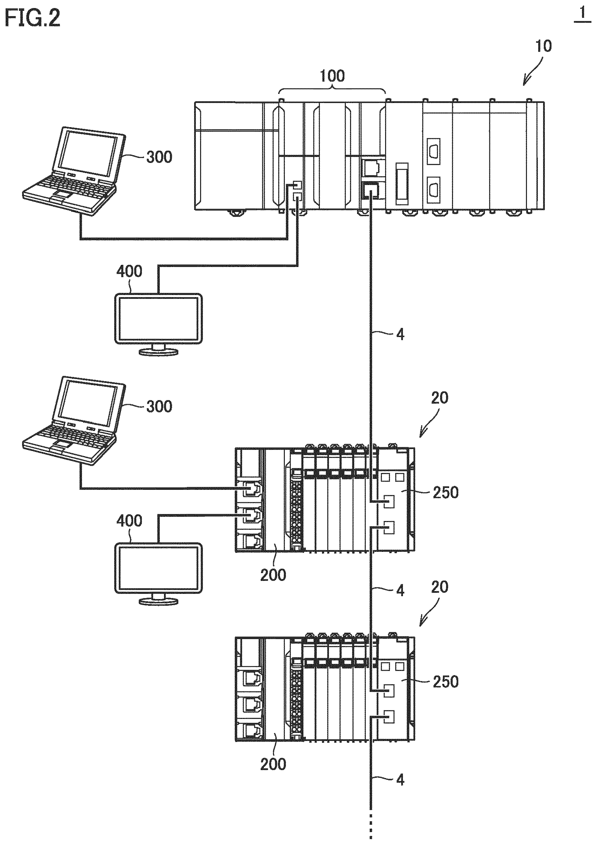

Fig. 2 is a schematic diagram showing an overall configuration example of control system 1 according to the present embodiment. Referring to Fig. 2, control system 1 according to the present embodiment includes a main controller 10 and one or more sub-controllers 20.

Herein, the terms "main controller" and "sub-controller" are used for convenience of distinction in description, which may be substantially identical in hardware configuration or substantially identical in functional configuration. The main controller and the sub-controller may be computers of a type, such as a programmable logic controller (PLC).

Main controller 10 is connected to one or more sub-controllers 20 via a field network 4. Field network 4 supports cyclic communication and message communication. Field network 4 may be, for example, EtherCAT (registered trademark), EtherNet/IP (registered trademark), PROFINET (registered trademark), PROFIBUS (registered trademark), DeviceNet (registered trademark), FL-net, CompoNet (registered trademark), or the like.

As described above, main controller 10 corresponds to the first controller that has an interface for connection to field network 4 that corresponds to the first transmission path.

Main controller 10 includes an arithmetic unit 100 that performs control arithmetic operations. Arithmetic unit 100 is capable of data communication via field network 4. Main controller 10 may further include a power supply unit, an I/O unit, a special unit, or any other unit.

Sub-controller 20 includes an arithmetic unit 200 that performs control arithmetic operations and a relay unit 250 that performs data communication via field network 4. Sub-controller 20 may further include a power supply unit, an I/O unit, a special unit, or any other unit.

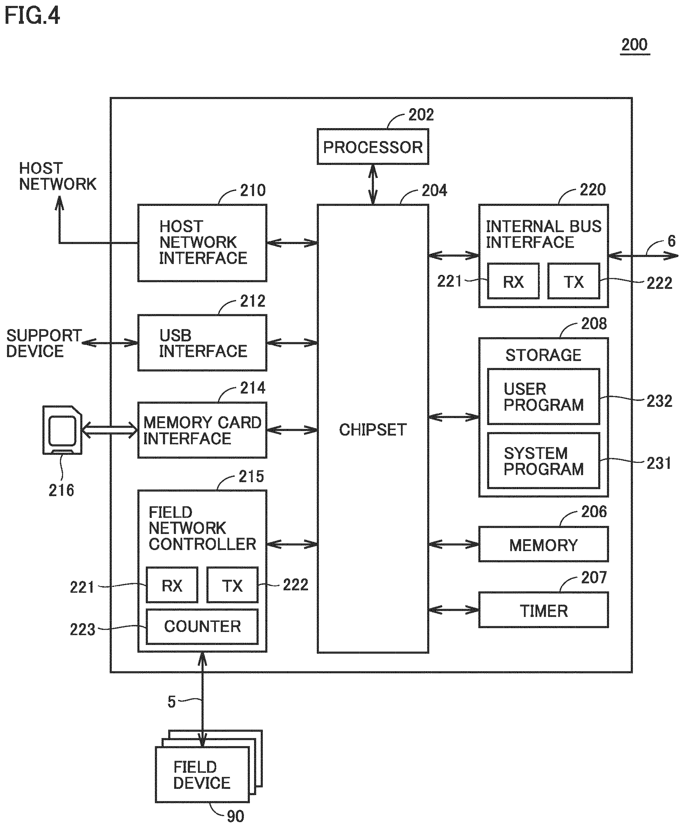

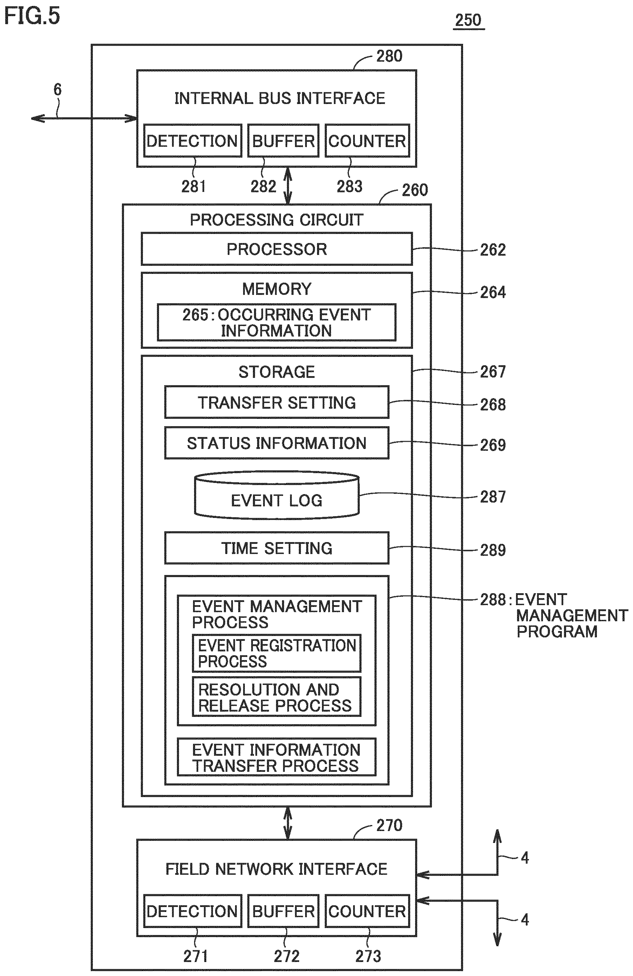

Arithmetic unit 200 is connected to relay unit 250 via an internal bus 6 (see Figs. 4 and 5). When sub-controller 20 includes an I/O unit and/or a special unit, the unit is also connected via internal bus 6.

As described above, arithmetic unit 200 corresponds to the second controller that has an interface for connection to internal bus 6 that corresponds to the second transmission path.

Relay unit 250 relays data transmitted from main controller 10 such that the data can be referred to by arithmetic unit 200, and relays data output by arithmetic unit 200 such that the data can be transmitted to main controller 10. In other words, relay unit 250 is a gateway that has a first interface for connection to field network 4 (first transmission path) and a second interface for connection to internal bus 6 (second transmission path).

Control system 1 may include a support device 300 for creating and modifying programs, settings, or the like executed by main controller 10 and/or sub-controller 20, and a display 400 that mainly provides a monitoring function. Support device 300 and display 400 may be connected to arithmetic unit 200 of sub-controller 20 or connected to arithmetic unit 100 of main controller 10.

### <C. Hardware Configuration Example>

Next, a hardware configuration example of the main devices of control system 1 according to the present embodiment will be described.

### (c1: Arithmetic Unit 100)

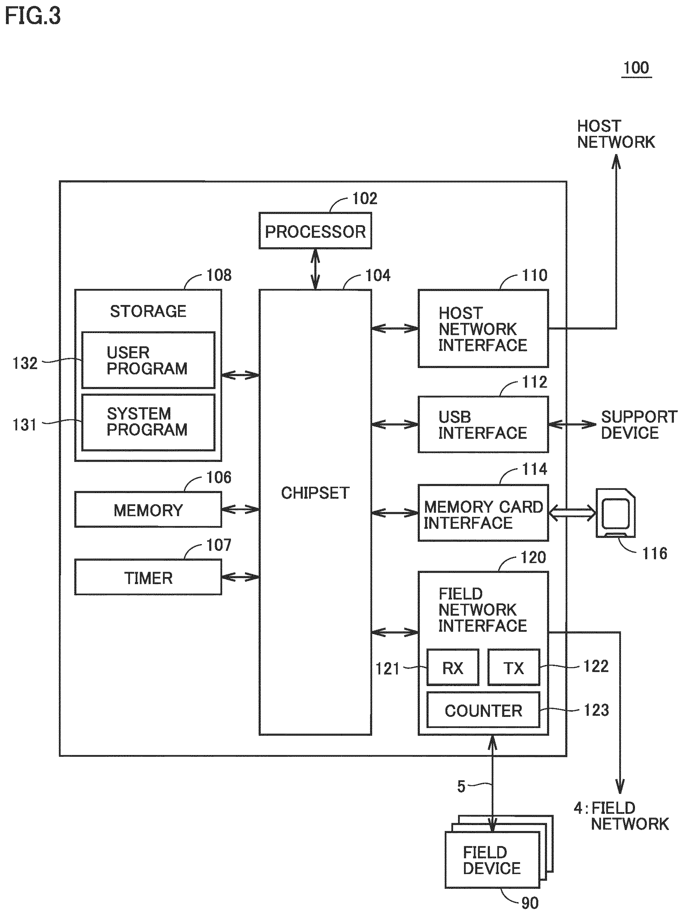

Fig. 3 is a block diagram showing a hardware configuration example of arithmetic unit 100 of main controller 10 according to the present embodiment. Referring to Fig. 3, arithmetic unit 100 includes a processor 102 such as a central processing unit (CPU) or a micro-processing unit (MPU), a chipset 104, a memory 106, a timer 107, a storage 108, a host network interface 110, a universal serial bus (USB) interface 112, a memory card interface 114, and a field network interface 120.

Processor 102 reads various programs stored in storage 108, deploys the read programs to memory 106 for execution, thereby implementing the processes required in arithmetic unit 100. Chipset 104 controls, for example, data communication between processor 102 and each component.

Storage 108 typically stores a system program 131 and a user program 132 that includes a computer-readable code necessary for control arithmetic operations.

Executing the programs stored in storage 108 causes arithmetic unit 100, which is a computer, to perform the processes described herein and also causes the functional configuration described herein to be implemented in arithmetic unit 100, which is a computer.

Host network interface 110 controls data communication with any other device via the host network. USB interface 112 controls data communication with support device 300 or display 400 via USB connection.

Memory card interface 114 is configured to allow memory card 116 to be inserted thereinto and removed therefrom, and can write data into memory card 116 and read various data (such as user programs and trace data) from memory card 116.

Field network interface 120 controls data communication with sub-controller 20 via field network 4. More specifically, field network interface 120 includes a receive buffer 121 for holding received data, a transmit buffer 122 used for, for example, generation of data to be transmitted, and a counter 123. Field network interface 120 is connected with one or more field devices 90 via network 5. Field devices 90 include actuators that exert some physical action on a manufacturing device or a production line, and input/output devices that include sensors that exchange information with the field. The data exchanged between sub-controller 20 and field device 90 via network 5 is updated in very short cycles in the order of several hundreds of microseconds to several tens of milliseconds.

Counter 123 is used as a time standard for managing the time of a communication process via network 5 or field network 4. Counter 123 typically increments or decrements a counter value in each predetermined cycle. For example, a free-running counter is used as counter 123, but it may be implemented using a high precision event timer (HPET) or the like, or may be implemented using a dedicated circuit such as an application specific integrated circuit (ASIC) or a field-programmable gate array (FPGA). Timer 107 is a counter of a type that provides a current time to processor 102 or the like.

### (c2: Arithmetic Unit 200)

Fig. 4 is a block diagram showing a hardware configuration example of arithmetic unit 200 of sub-controller 20 according to the present embodiment. Referring to Fig. 4, arithmetic unit 200 includes a processor 202 such as CPU or MPU, a chipset 204, a memory 206, a timer 207, a storage 208, a host network interface 210, a USB interface 212, a memory card interface 214, a field network controller 215, and an internal bus interface 220.

Processor 202 reads various programs stored in storage 208, and deploys the read programs to memory 206 for execution, thereby implementing the processes required in arithmetic unit 200. Chipset 204 controls, for example, data communication between processor 202 and each component.

Storage 208 typically stores a system program 231 and a user program 232 that includes a computer-readable code necessary for control arithmetic operations.

Executing the programs stored in storage 208 causes arithmetic unit 200, which is a computer, to perform the processes described herein and also causes the functional configuration described herein to be implemented in arithmetic unit 200, which is a computer.

Host network interface 210 controls data communication with any other device via the host network. USB interface 212 controls data communication with support device 300 or display 400 via USB connection.

Memory card interface 214 is configured to allow memory card 216 to be inserted thereinto and removed therefrom, and can write data to memory card 216 and read various data (such as user programs or trace data) from memory card 216.

Internal bus interface 220 controls data communication with one or more units (including relay unit 250) via internal bus 6. More specifically, internal bus interface 220 includes a receive buffer 221 for holding received data and a transmit buffer 222 used for, for example, generation of data to be transmitted.

Internal bus 6 supports cyclic communication and message communication, similarly to field network 4. A communication method dedicated to a manufacturer may be adopted as internal bus 6, which may be, for example, EtherCAT (registered trademark), EtherNet/IP (registered trademark), PROFINET (registered trademark), PROFIBUS (registered trademark), DeviceNet (registered trademark), FL-net, CompoNet (registered trademark), or the like.

Field network controller 215 includes a receive buffer 221 for holding received data, a transmit buffer 222 used for, for example, generation of data to be transmitted, and a counter 223 for managing communication via network 5, which has a configuration similar to that of counter 123 (Fig. 4). Field network controller 215 is connected with one or more field devices 90 via network 5. The configuration of field network controller 215 is the same as that of field network interface 120 in Fig. 3, and accordingly, description thereof will not be repeated. Timer 207 is a counter of a type, similar to timer 107 in Fig. 3, that provides a current time to processor 202 or the like.

### (c3: Relay Unit 250)

Fig. 5 is a block diagram showing a hardware configuration example of relay unit 250 of sub-controller 20 according to the present embodiment. Referring to Fig. 5, relay unit 250 includes a processing circuit 260, a field network interface 270, and an internal bus interface 280.

Processing circuit 260 implements the processes and functions of relay unit 250, which will be described later. More specifically, processing circuit 260 includes a processor 262, a memory 264, and a storage 267. Processor 262 reads a system program (firmware) stored in storage 267, and deploys the read system program to memory 264 for execution, thereby implementing the processes required in relay unit 250. In addition to the system program, a transfer setting 268 for implementing data transfer, status information 269, an event log 287, a time setting 289, and an event management program 288 are stored in storage 267. Relay unit 250 performs an event management process, an event registration process, or any other process by executing event management program 288. The event management process includes a resolution and release process, which will be described later.

Transfer setting 268 includes setting items for the data to be transferred from arithmetic unit 200 to main controller 10 and setting items for the data to be transferred from main controller 10 to arithmetic unit 200. Such setting items include, for example, an identifier of the data that is a data transfer target. In addition, transfer setting 268 can include items in which the type of a state that is to be transmitted to arithmetic unit 200 or main controller 10 is set among the various communication states detected for the transmission path (field network 4 or internal bus 6). These setting items can be set by, for example, a user's operation.

Field network interface 270 controls data communication between main controller 10 and sub-controller 20 via field network 4. More specifically, field network interface 270 includes a detection unit 271 that detects a communication state of field network 4, a buffer 272 including a buffer for holding received data and a buffer used for, for example, generation of data to be transmitted, and a counter 273. Counter 273 has a configuration similar to that of counter 123 shown in Fig. 3, and manages times related to data communication via field network 4.

Internal bus interface 280 controls data communication with one or more units (including arithmetic unit 200) via internal bus 6. More specifically, internal bus interface 280 includes a detection unit 281 that detects the communication state of internal bus 6, a buffer 282 including a buffer for holding received data and a buffer used for, for example, generation of data to be transmitted, and a counter 283. Counter 283 has a configuration similar to that of counter 123 shown in Fig. 3, and manages times related to data communication via internal bus 6.

### (c4: Other Configurations)

Figs. 3 to 5 show configuration examples in which the required functions are provided as the processor executes a program, but some or all of these provided functions may be implemented using a dedicated hardware circuit (e.g., ASIC or FPGA).

Herein, the "processor" is not limited to a narrowly-defined processor that executes processes in a stored program manner, but may include a hardwired circuit such as ASIC or FPGA. Thus, the term "processor" may be read as processing circuitry, in which processes are predefined by a computer-readable code and/or a hardwired circuit.

The main part of the arithmetic unit may be implemented using hardware that follows a general-purpose architecture (e.g., an industrial personal computer based on a general-purpose personal computer). In this case, virtualization technology may be used to execute a plurality of operating systems (OS) with different applications in parallel and execute a required application on each OS.

### (c5: Support Device 300 and Display 400)

Support device 300 and display 400 according to the present embodiment are, by way of example, configured of general-purpose computers that follow a general-purpose architecture. Since examples of the hardware configuration of a general-purpose computer are well known, detailed description thereof will not be provided.

### <D. Time Synchronization and Communication State Management>

Relay unit 250 performs time synchronization with the arithmetic unit, and also, relay unit 250 detects the communication state.

### (d1: Time Synchronization)

In the present embodiment, arithmetic unit 200 and relay unit 250 connected to arithmetic unit 200 via internal bus 6 perform "time synchronization". In addition, arithmetic unit 200 and arithmetic unit 100 connected to arithmetic unit 200 via field network 4 perform "time synchronization". Time synchronization refers to synchronizing timers, time data, or the like of both the units. Through such time synchronization, a count value counted by counter 283 of internal bus interface 280 synchronizes with a time counted by timer 207 of arithmetic unit 200. In addition, a count value counted by counter 273 of field network interface 270 synchronizes with a time counted by timer 107 of arithmetic unit 100.

### (d2: Detection of Communication State)

Detection unit 281 is implemented by a program (firmware) executed by a processor circuit (not shown), such as an ASIC or FPGA, of internal bus interface 280. Specifically, as the program is executed, detection unit 281 detects the communication state of internal bus 6. Specifically, detection unit 281 detects the occurrence of an event in the communication and outputs an event code for identifying the detected event to processing circuit 260. Detection unit 281 detects, as an event, for example, a timeout based on the communication of internal bus 6, or detects that communication cannot be started based on the communication data of internal bus 6 or the data from processing circuit 260. In addition, every time an event code of an event that has occurred in the communication state of internal bus 6 is input from detection unit 281, processing circuit 260 compares the input event code with the event code that has been detected until then, and when determining that there is an event that is no longer detected based on a comparison result, that is, when detecting that the event has been resolved, acquires the event code for identifying the resolved event.

Detection unit 271 is implemented by a program (firmware) executed by a processor circuit (not shown), such as ASIC or FPGA, of field network interface 270. Specifically, as the program is executed, detection unit 271 detects the communication state of the field network. Specifically, detection unit 271 detects the occurrence of an event in the communication and outputs an event code 31 for identifying the detected event, which will be described later, to processing circuit 260. For example, detection unit 271 detects a timeout based on communication of field network 4, or detects that communication cannot be started based on communication data of field network 4 or data from processing circuit 260. In addition, every time an event code of an event that has occurred in the communication state of field network 4 is input from detection unit 271, processing circuit 260 compares the input event code with the event code that has been detected until then, and when determining that there is an event that is no longer detected based on a comparison result, that is, when detecting that the event has been resolved, acquires the event code for identifying the resolved event.

Memory 264 of relay unit 250 stores occurring event information 265, which will be described later. Status information 269 of storage 267 has a plurality of event codes and statuses corresponding to the respective event codes. Status information 269 has a data structure that allows the status corresponding to the event to be retrieved based on the event code. In the present embodiment, the "status" indicates the importance of a corresponding event. The importance indicates the degree of impact of an event on communication, or indicates the degree of necessity of an action against the communication state indicated by the event, or indicates the degree of urgency of an action. Accordingly, the necessity or urgency of an action against a corresponding event increases as the importance indicated by the status is higher.

### <E. Example of Occurring Event Information 265>

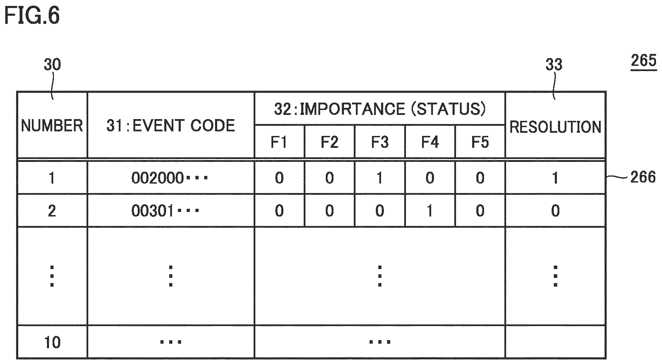

Figs. 6, 7, and 8 show examples of occurring event information 265 according to the present embodiment. Fig. 6 shows a basic configuration of a record 266 according to the present embodiment. Referring to Fig. 6, occurring event information 265 has a table-type configuration in which, for example, 10 records 266 can be registered. Record 266 that shows the detailed information on the event includes an entry number 30, an event code 31, an importance 32 of the event indicated by event code 31, and a resolution flag 33 that indicates whether or not the resolution of the event has been detected. Importance 32, which corresponds to the status, is not limited, but is divided into, for example, five levels of flags F1 to F5. Flag F1 indicates the highest importance, where a corresponding event falls under a fault level that causes the entire control system 1 to stop operating. Flag F2 indicates the next highest importance, where a corresponding event falls under a fault level that causes control system 1 to stop operating partially. Flag F3 indicates a lower importance than the importance of flag F2 and indicates that, for example, a corresponding event falls under a minor fault level. Flag F4 indicates a lower importance than the importance of flag F3 and indicates that, for example, a corresponding event falls under a monitoring information level. Flag F5 indicates a lower importance than the importance of flag F4 and indicates that, for example, a corresponding event falls under general information. When record 266 is registered in occurring event information 265, resolution flag 33 of record 266 is set to "1". Resolution flag 33 of record 266 is set to "0", that is, is changed from "1" to "0", when event resolution is detected for the corresponding event. In addition, one of flags F1 to F5 is set to "1" based on the importance determined for the event. Although 10 records 266 can be registered in occurring event information 265, this number is not limited to 10.

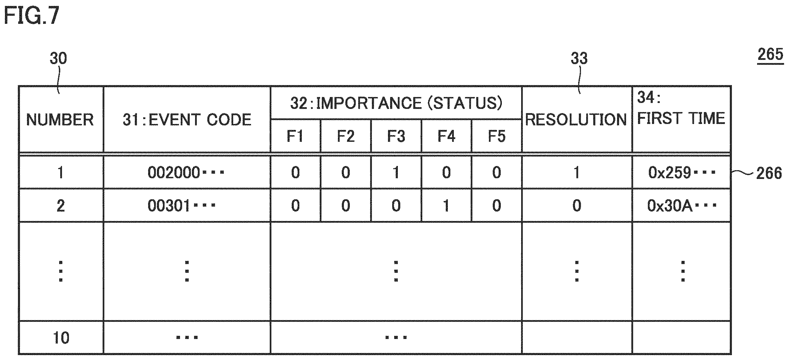

Record 266 of occurring event information 265 can be configured, as shown in Fig. 7, to include time data 34 indicating a time of detection of an event, in addition to the information of Fig. 6. Time data 34 indicates a time based on the counter value output from one of counter 273 and counter 283 when the event indicated by event code 31 is detected. In the present embodiment, the counter that provides the counter value that becomes the basis for time data 34 can be specified by time setting 289 based on, for example, a user's operation received from support device 300.

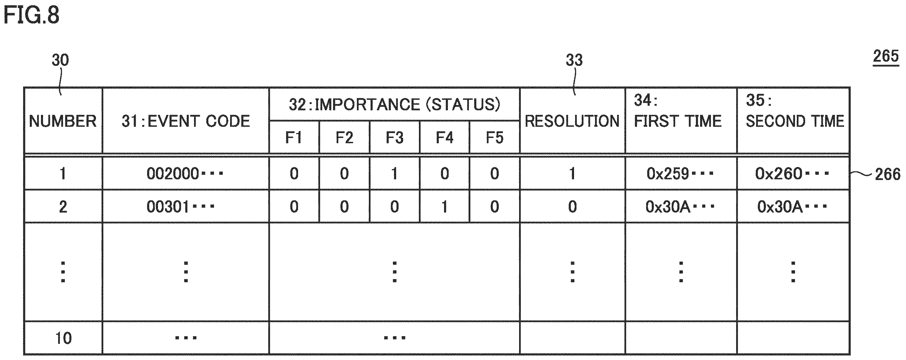

Record 266 may include first time data 35 based on the output of counter 273 and second time data 36 based on the output of counter 283 as the times of such event detection, as shown in Fig. 8.

The configuration of record 266 registered in occurring event information 265 can be any of the configurations shown in Figs. 6 to 8, depending on, for example, a user's operation received from support device 300 or the like. In the following, record 266 has, for example, the configuration shown in Fig. 7 or 8.

### <F. Data Communication>

Next, data communication in control system 1 according to the present embodiment will be described.

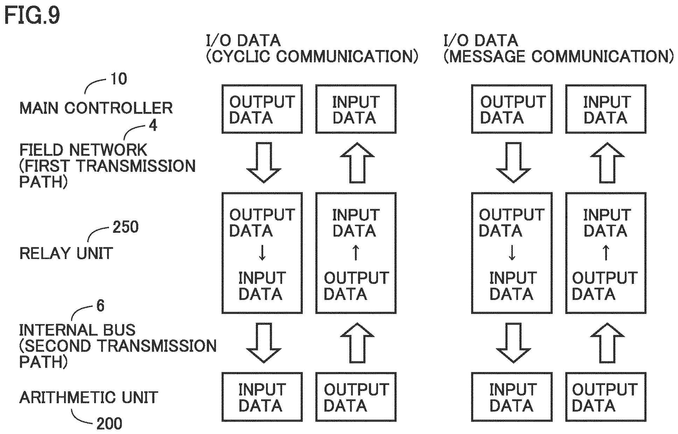

Fig. 9 is a schematic diagram showing an overview of data communication in control system 1 according to the present embodiment. Fig. 9 shows a transmission example of I/O data between main controller 10 and arithmetic unit 200.

Referring to Fig. 9, relay unit 250 is arranged as a gateway between main controller 10 and arithmetic unit 200. Main controller 10 is connected to relay unit 250 via field network 4, which corresponds to the first transmission path.

Assumed here are the case where the output data of main controller 10 is transmitted to arithmetic unit 200 via relay unit 250 and the case where the output data of arithmetic unit 200 is transmitted to main controller 10 via relay unit 250. In the present embodiment, a method using cyclic communication and a method using message communication can be used for either transmission.

In general control systems, I/O data is transmitted only by cyclic communication, but in the present embodiment, either cyclic communication or message communication can be selected depending on the volume of data to be transmitted, the required punctuality, or the like.

Data (output data) transmitted from main controller 10 is transmitted to relay unit 250. Relay unit 250 transmits the data received as the output data of main controller 10 to arithmetic unit 200 as input data of arithmetic unit 200.

In contrast, data (output data) transmitted from arithmetic unit 200 is transmitted to relay unit 250. Relay unit 250 transmits the data received as the output data of arithmetic unit 200 to main controller 10 as input data of main controller 10.

In this way, relay unit 250 transfers data between main controller 10 and arithmetic unit 200. In other words, in accordance with transfer setting 268 (Fig. 5), relay unit 250 transmits, to arithmetic unit 200 (second controller), output data transmitted from main controller 10 (first controller) by cyclic communication, and relay unit 250 transmits, to arithmetic unit 200, output data transmitted from main controller 10 by message communication.

Similarly, in accordance with transfer setting 268, relay unit 250 transmits, to main controller 10, output data transmitted from arithmetic unit 200 by cyclic communication, and relay unit 250 transmits, to main controller 10, output data transmitted from arithmetic unit 200 by message communication.

At this time, relay unit 250 may transmit, to arithmetic unit 200 by cyclic communication, the output data transmitted from main controller 10 by cyclic communication, and may transmit, to arithmetic unit 200 by message communication, the output data transmitted from main controller 10 by message communication. Alternatively, the method of transmitting data from main controller 10 to relay unit 250 may be different from the method of transmitting data from relay unit 250 to arithmetic unit 200.

In cyclic communication, data is transmitted in each predetermined transmission cycle, and accordingly, a destination can always use the latest data.

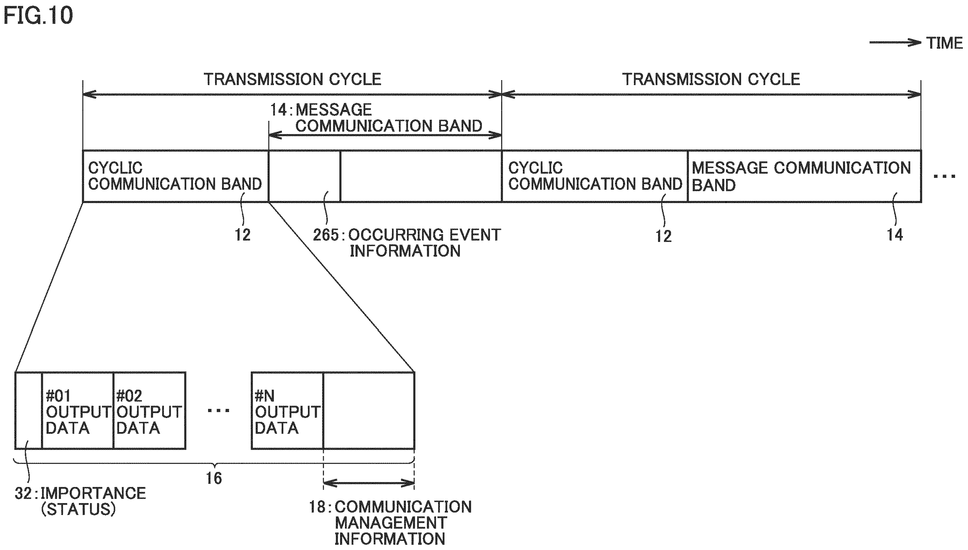

Fig. 10 is a schematic diagram showing an example data structure used for data communication in control system 1 according to the present embodiment.

Referring to Fig. 10, in field network 4, the communication band is divided for each transmission cycle. Each transmission cycle includes a cyclic communication band 12 and a message communication band 14. In cyclic communication band 12, a frame 16 of a predetermined data size is transmitted. Frame 16 is sequentially transferred between the devices (units) connected to field network 4. As a result, frame 16 cyclically circulates through field network 4.

An area for writing output data for each device connected to field network 4 is prepared in cyclic communication band 12. Fig. 10 shows an example in which N number of areas are prepared respectively for N number of devices to write output data. A device connected to field network 4 can refer to data stored in an area other than the area for the device to write data (i.e., data written by any other device).

In cyclic communication band 12, an area for storing the management information (communication management information 18) required for communication of control system 1 is also prepared in addition to the area into which output data can be written.

In addition, an area for storing importance 32 of each event registered in occurring event information 265 is also prepared in frame 16 of cyclic communication band 12. Relay unit 250 writes importance 32 of occurring event information 265 of memory 264 into frame 16 received from the transmission path of one of internal bus 6 or field network 4, and transmits frame 16 to the other transmission path of internal bus 6 or field network 4. Thus, importance 32 of each occurring event cyclically circulates between the devices (units) connected to field network 4. Through such circulation, the devices (units) connected to field network 4 can receive importance 32 of the occurring event.

In contrast, message communication band 14 is used for message communication from a specified device to one or more other devices, in accordance with an instruction from a device (e.g., referred to as "communication master" or "master") that manages field network 4. Note that in message communication, data of a data size larger than that of the data transmitted in a single cyclic communication may be transmitted, and thus, a single data transmission may require a cyclic communication band for a plurality of data transmissions.

In addition, in internal bus 6, the communication band is divided for each transmission cycle, and each transmission cycle includes a cyclic communication band and a message communication band, as in Fig. 10.

In the present embodiment, an area for relay unit 250 to store occurring event information 265 is prepared in message communication band 14. Occurring event information 265 is transferred to the controller (main controller 10 or arithmetic unit 200) from relay unit 250 by message communication. This enables the controller to acquire occurring event information 265, which indicates the details of the event indicated by importance 32 in frame 16 received cyclically, by message communication.

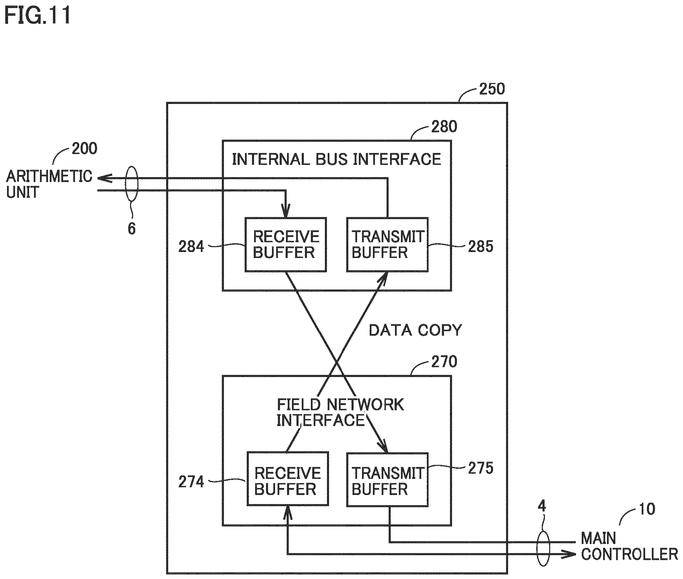

Fig. 11 is a diagram for illustrating the process in relay unit 250 in control system 1 according to the present embodiment. In Fig. 11, the data transfer process in relay unit 250 is mainly shown.

Referring to Fig. 11, relay unit 250 includes a field network interface 270 connected to field network 4 and an internal bus interface 280 connected to internal bus 6.

Buffer 272 of field network interface 270 has a receive buffer 274 and a transmit buffer 275. Receive buffer 274 holds data received from main controller 10, and transmit buffer 275 holds data to be transmitted to main controller 10.

Buffer 282 of internal bus interface 280 has a receive buffer 284 and a transmit buffer 285. Receive buffer 284 holds data received from arithmetic unit 200, and transmit buffer 285 holds data to be transmitted to arithmetic unit 200.

Relay unit 250 copies the data held by receive buffer 274 of field network interface 270 to transmit buffer 285 of internal bus interface 280, and copies the data held by receive buffer 284 of internal bus interface 280 to transmit buffer 272 of field network interface 270.

Relay unit 250 implements data transfer by such copying of data between buffers.

### <G. I/O Data Transmission of Cyclic Communication>

Next, I/O data transmission of cyclic communication in control system 1 according to the present embodiment will be described.

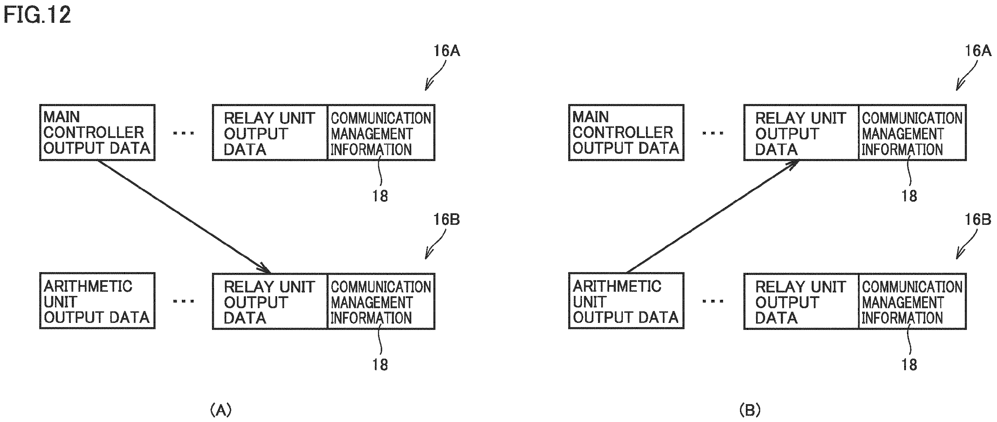

Fig. 12 is a diagram for illustrating I/O data transmission of cyclic communication in control system 1 according to the present embodiment. Fig. 12 shows a frame 16A that cyclically circulates through field network 4, and a frame 16B that cyclically circulates through internal bus 6.

(A) of Fig. 12 shows a process example for implementing data transmission from main controller 10 to arithmetic unit 200. Referring to (A) of Fig. 12, main controller 10 writes output data into the area allocated to frame 16A. Frame 16A is then transmitted to relay unit 250.

Relay unit 250 extracts the output data of main controller 10 included in frame 16A and writes the extracted output data of main controller 10 into the area allocated to frame 16B. In other words, frame 16B includes the output data of main controller 10 as the output data of relay unit 250. In addition, relay unit 250 writes importance 32 corresponding to each event of occurring event information 265 into frame 16B. Frame 16B is then transmitted to arithmetic unit 200. Arithmetic unit 200 extracts, as input data, output data of relay unit 250 (output data of main controller 10) included in frame 16B.

(B) of Fig. 12 shows a process example for implementing data transmission from sub-controller 20 to main controller 10. Referring to (B) of Fig. 12, arithmetic unit 200 writes output data into the area allocated to frame 16B. Frame 16B is then transmitted to relay unit 250.

Relay unit 250 extracts the output data of arithmetic unit 200 included in frame 16B and writes the extracted output data of arithmetic unit 200 into the area allocated to frame 16A. In other words, frame 16A includes the output data of arithmetic unit 200 as the output data of relay unit 250. At this time, relay unit 250 writes importance 32 corresponding to each event of occurring event information 265 into frame 16A. Subsequently, frame 16A is transmitted to main controller 10. Main controller 10 extracts, as input data, the output data of relay unit 250 (output data of arithmetic unit 200) included in frame 16A.

As shown in Fig. 12, relay unit 250 implements I/O data transmission by cyclic communication by exchanging (copying) data between frame 16A that cyclically circulates through field network 4 and frame 16B that cyclically circulates through internal bus 6.

For the data exchange (copying) in relay unit 250 shown in Figs. 11 and 12, exchanging (copying) of importance 32 of each event stored in the relevant frame 16 is performed together with the output data of frame 16. As a result, importance 32 of each occurring event also cyclically circulates through internal bus 6 and field network 4.

In control system 1 that provides the communication environment described above, relay device 250 communicates with the communication master connected to field network 4, and also communicates with arithmetic unit 200 serving as the communication master connected to internal bus 6 in communication via internal bus 6.

### <H. Processing of Events>

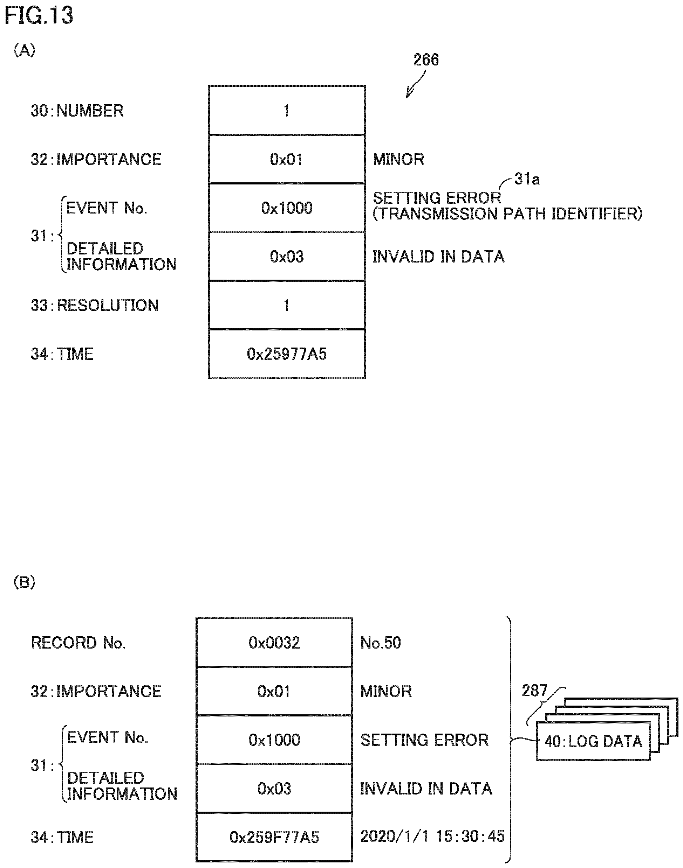

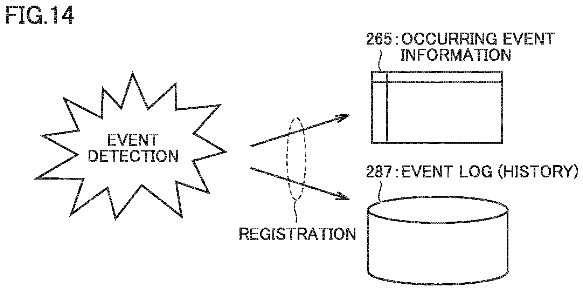

Referring to Figs. 13 to 16, processing of events by relay unit 250 will be described. Fig. 13 is a diagram showing an example data structure according to the present embodiment. Fig. 14 is a diagram for illustrating event management according to the present embodiment. In the present embodiment, as shown in Fig. 14, when detecting the occurrence of an event, relay unit 250 registers a record 266 based on the detected event information in occurring event information 265 and also registers log data 40 based on the detected event information in an event log 287. Event log 287 is configured such that log data 40 for each detected event is accumulated, and accordingly, event log 287 shows the history of the events that have occurred.

Referring to (A) of Fig. 13, record 266 of occurring event information 265 includes entry number 30, importance 32 indicated as "1" by flag F3, event code 31, resolution flag 33, and time data 34. Event code 31 includes an event No. indicating a setting abnormality and detailed information indicating that the input (IN) data is invalid as detailed event information. Event code 31 includes a transmission path identifier 31a for identifying a transmission path in which an event has been detected.

Referring to (B) of Fig. 13, event log 287 includes one or more pieces of log data 40 that are accumulated in a record format. Log data 40 includes a number for identifying log data 40 and information on the detected event. The information on the event includes importance 32, event code 31, and time data 34. When an event is detected and record 266 of (A) of Fig. 13 based on the information on the detected event is newly registered in occurring event information 265, at the same time, log data 40 of (B) of Fig. 13 based on the information on the event is registered in event log 287.

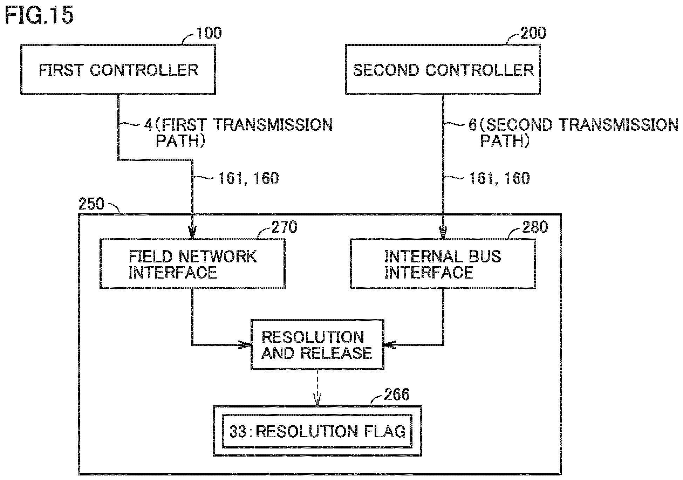

Relay unit 250 performs the resolution and release process for occurring event information 265. Referring to Fig. 15, when detecting resolution of an event or accepting a release operation, relay unit 250 performs the resolution and release process.

When detecting resolution of an event, relay unit 250 retrieves, based on an event code indicated by the detection, record 266 with event code 31 that matches the event code from occurring event information 265, and sets resolution flag 33 of the retrieved record 266 to "0". As a result, record 266 in occurring event information 265 is set to indicate that an event has been resolved.

When accepting a release operation, relay unit 250 retrieves, based on an event code indicated by the release operation, record 266 with event code 31 that matches the event code from occurring event information 265. When determining that resolution flag 33 of the retrieved record 266 is set to "0", relay unit 250 deletes record 266 from occurring event information 265. Also, when resolution flag 33 of the retrieved record 266 indicates "1", that is, when the event resolution has not yet been detected, relay unit 250 does not delete record 266 from occurring event information 265.

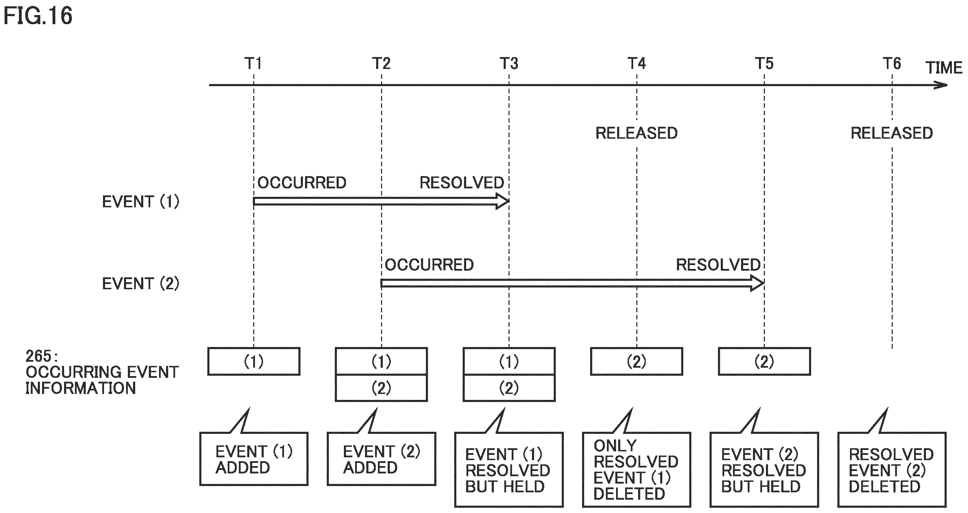

In this way, record 266 of occurring event information 265 is deleted from occurring event information 265 when the release of the event is instructed (operated) after the resolution of a corresponding event has been detected. A specific processing flow is shown in Fig. 16. In Fig. 16, an event (1) occurs at a time T1 and event (1) is registered in occurring event information 265, and an event (2) occurs at a time T2 after that, and record 266 of event (2) is registered in occurring event information 265.

At a time T3 after that, when the resolution of event (1) is detected, resolution flag 33 for event (1) is set to "0", but this record 266 is not deleted but is held. At a time T4 after that, when the operation of releasing event (1) is accepted, this record 266 is deleted from occurring event information 265 based on resolution flag 33 for event (1) being set to "0".

At a time T5 after that, when the resolution of event (2) is detected, resolution flag 33 for event (2) is set to "0", but this record 266 is not deleted but is held. At a time T6 after that, the operation of releasing event (2) is accepted. At this time, since resolution flag 33 for event (2) is set to "0", this record 266 is deleted from occurring event information 265 based on the accepted release operation.

According to the process of Fig. 16, upon detection of an event, the information on the event is registered in occurring event information 265 and event log 287. When the resolution of an event registered in this way is detected, and then, the release operation is accepted, the information on the event is deleted from occurring event information 265 while being held by event log 287.

In this way, when the "detection of resolution" of an event that has occurred is performed and the "release operation" is then performed, the information (record 366) on the event is deleted from occurring event information 265, and cyclic transmission of importance 32 corresponding to the event is stopped.

### <I. Example of User Interface>

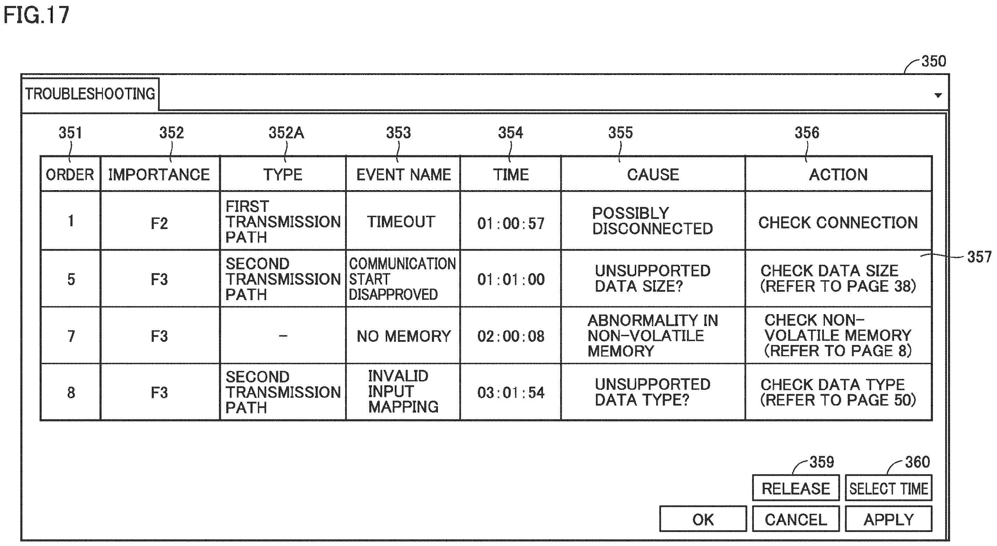

Fig. 17 shows an example user interface according to the present embodiment. A device such as main controller 10 or sub-controller 20 displays importance 32 of an event received by cyclic communication or occurring event information 265 received by message communication. For example, for display, the device transfers importance 32 of the event and occurring event information 265 to support device 300 or display 400 connected to this device. Fig. 17 shows, for example, an example of a screen 350 that is displayed on the display of support device 300. Display 400 can also display a screen similar to that of Fig. 17. The configuration for providing such a user interface is not limited to the configuration for providing a user interface using a tool of device 300 or display 400.

Screen 350 of Fig. 17 includes information for taking action against an occurring event. Screen 350 includes, based on each record 266 of occurring event information 265, an order 351 corresponding to entry number 30, an importance 352 corresponding to importance 32, a type 352A and an event name 353 based on event code 31, a time of occurrence 354 based on time data 34, a cause 355, and an action 356. Cause 355 indicates the cause (factor) that is presumed for occurrence of an event, and action 356 indicates information for taking action against the event based on the cause. Support device 300 retrieves a corresponding presumed cause and information on an action from the predetermined information based on event code 31 of occurring event information 265. Consequently, cause 355 and information on action 356 are acquired. For example, information 357 on the relevant page of a user manual for troubleshooting may be included in action 356.

Screen 350 further includes buttons 359 and 360 that are operated for accepting user's operations. Button 359 is the release operation button, which is operated to release an occurring event. When accepting the operation of button 359, support device 300 or display 400 transfers a command for the release operation, including an event code, to relay unit 250. This enables relay unit 250 to accept the event release operation. The event code included in such a release operation includes, for example, the event code of the event specified by the user's touch operation or any other operation on screen 350 of Fig. 17.

Button 360 is operated for setting one or both of a first time based on the counter value of counter 273 and a second time based on the counter value of counter 283 as the time to be registered in record 266 of occurring event information 265. Such time setting by a user's operation is transferred to relay unit 250 and stored as time setting 289.

In addition, such a user interface may be configured to accept, on the screen of Fig. 17, a user's operation to switch time 354 of each event to display of one or both of the first time and the second time.

Such a user interface screen can be configured to include a screen that displays only importance 352 corresponding to each occurring event received by cyclic communication, and a screen of Fig. 17 based on occurring event information 265 received by message communication.

### <J. Process Flowchart>

Next, a process example performed by relay unit 250 in control system 1 according to the present embodiment will be described.

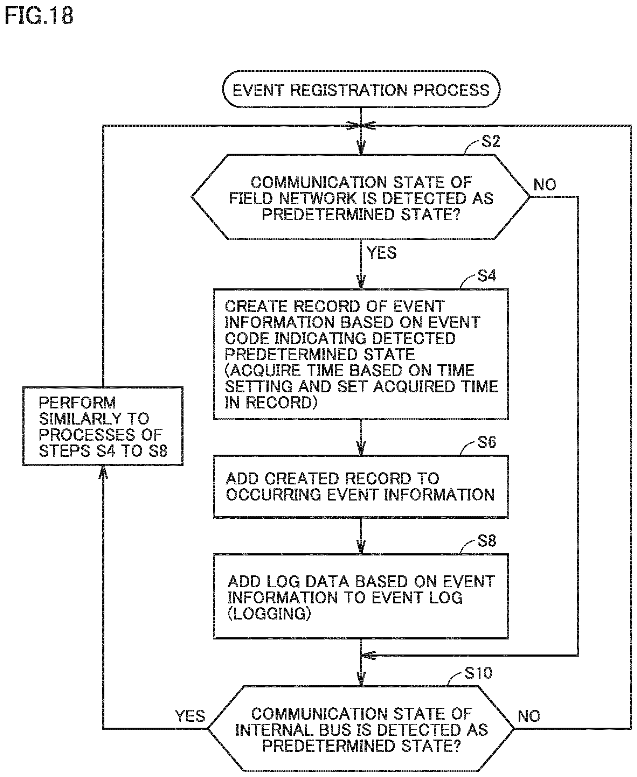

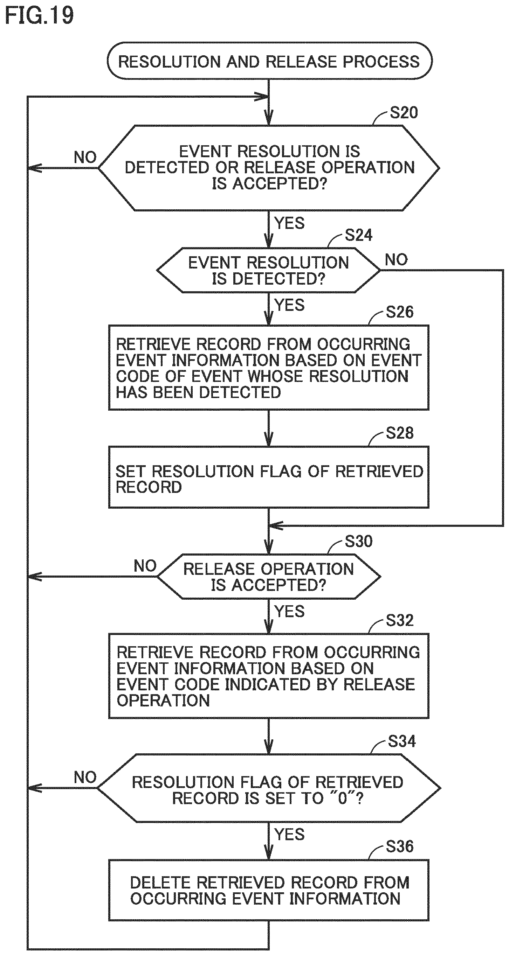

Fig. 18 is a flowchart showing an example event information registration process by relay unit 250 according to the present embodiment. Fig. 19 is a flowchart showing an example resolution and release process by relay unit 250 according to the present embodiment. The steps shown in Figs. 18 and 19 may be implemented as processor 262 of relay unit 250 executes event management program 288.

Referring to Fig. 18, relay unit 250 determines whether the communication state of field network 4 is detected as a predetermined state, for example, a predetermined state with an occurring event such as an abnormality is detected (step S2). When the state with an occurring event is detected (YES in step S2), relay unit 250 creates record 266 of event information based on the event code indicating the detected event. Relay unit 250 acquires the time (the first time, the second time, or both the times) set by time setting 289 and sets the acquired time as time data 34 of record 266 (step S4). Relay unit 250 then registers the created record 266 in occurring event information 265 (step S6) and performs logging (step S8). In other words, relay unit 250 creates log data 40 based on the above event information and registers the created log data 40 in event log 287. The process then moves to step S10.

When it is detected that the communication state of field network 4 is not the state with an occurring event (NO in step S2), the processes of steps S4 to S8 are skipped, and the process moves to step S10.

Relay unit 250 determines whether the communication state of internal bus 6 is detected as a predetermined state, for example, a predetermined state with an occurring event such as an abnormality is detected (step S10). When the state with an occurring event is detected (YES in step S10), the processes of steps S4 to S8 are performed for the event detected in the communication state of internal bus 6. In other words, record 266 of event information based on the event code indicating this event is created (step S4), record 266 is registered in occurring event information 265 (step S6), and log data 40 based on this event information is created and registered in event log 287 (step S8). The process then moves to step S2.

In contrast, when it is detected that the communication state of internal bus 6 is not the state with an occurring event (NO in step S10), the processes of steps S4 to S8 are skipped, the process moves to step S2, and the subsequent processes of steps S2 to S10 are repeatedly performed as described above.

Referring to Fig. 19, relay unit 250 determines whether an event resolution is detected or the release operation is accepted for the communication state of field network 4 or internal bus 6 (step S20).

When it is determined that an event resolution is not detected and the release operation is not accepted (NO in step S20), the process of step S20 is repeatedly performed. When determining that the event resolution has been detected (YES in step S24), relay unit 250 retrieves, based on an event code for which the resolution has been detected, record 266 with event code 31 that matches the event code from occurring event information 265 (step S26). Relay unit 250 sets resolution flag 33 of the retrieved record 266 to "0" (step S28).

When determining that the release operation has been accepted in step S20 (YES in step S30), relay unit 250 retrieves, based on an event code indicated by the accepted release operation, record 266 with event code 31 that matches this event code from occurring event information 265 (step S32). Relay unit 250 determines whether or not resolution flag 33 of the retrieved record 266 is set to "0" (step S34). When determining that resolution flag 33 of this record 266 is set to "0" (YES in step S34), relay unit 250 deletes this record 266 from occurring event information 265 (step S36). Subsequently, the process returns to step S20, and relay unit 250 repeatedly performs the subsequent processes in the same way as described above.

When it is determined that an event resolution has not been detected (NO in step S24), the process moves to step S30. Also, when it is determined that the release operation has not been accepted (NO in step S30), or when it is determined that resolution flag 33 of the retrieved record 266 is not set to "0" (NO in step S34), the process returns to step S20.

### <K. Additional Notes>

The present embodiment as described above includes the following technical ideas.

### [Configuration 1]

A control system (1) including:
a first controller (100) including an interface (120) for connection to a first transmission path (4);
a second controller (200) including an interface (220) for connection to a second transmission path (6); and
a relay unit (250) including
   a first interface (270) for connection to the first transmission path, and
   a second interface (280) for connection to the second transmission path, wherein
the relay unit includes a detection unit (271) configured to detect a communication state of the first transmission path, and
the relay unit is configured to, in accordance with a transfer setting (268), transmit, to the second controller, output data transmitted from the first controller, and transmit, to the second controller, first state data (265) indicating the detected communication state of the first transmission path.

### [Configuration 2]

The control system according to configuration 1, wherein the relay unit is configured to
transmit, to the second controller by cyclic communication, output data transmitted from the first controller by cyclic communication, and
transmit the first state data to the second controller by cyclic communication.

### [Configuration 3]

The control system according to configuration 1 or 2, wherein the relay unit is configured to detect a recovery of the communication state indicated by the first state data.

### [Configuration 4]

The control system according to configuration 3, wherein the relay unit is configured to stop transmitting the first state data after detecting the recovery.

### [Configuration 5]

The control system according to any one of configurations 1 to 4, wherein
the first state data indicates an importance (32) of an action against the detected communication state of the first transmission path, and
the relay unit is configured to transmit, to the second controller by message communication, information (265) indicating details of the detected communication state of the first transmission path.

### [Configuration 6]

The control system according to any one of configurations 1 to 5, wherein
the detection unit is further configured to detect a communication state of the second transmission path, and
the relay unit is further configured to, in accordance with the transfer setting, transmit, to the first controller, output data transmitted from the second controller, and transmit, to the first controller, second state data (265) indicating the detected communication state of the second transmission path.

### [Configuration 7]

The control system according to configuration 6, wherein the relay unit is configured to
transmit, to the first controller by cyclic communication, output data transmitted from the second controller by cyclic communication, and
transmit the second state data to the first controller by cyclic communication.

### [Configuration 8]

The control system according to configuration 6 or 7, wherein the relay unit is configured to detect a recovery of the communication state indicated by the second state data.

### [Configuration 9]

The control system according to configuration 8, wherein the relay unit is configured to stop transmitting the second state data after detecting the recovery of the communication state indicated by the second state data.

### [Configuration 10]

The control system according to any one of configurations 6 to 8, wherein
the second state data indicates an importance (32) of an action against the detected communication state of the second transmission path, and
the relay unit is configured to transmit, to the first controller by message communication, information (265) indicating details of the detected communication state of the second transmission path.

### [Configuration 11]

The control system according to any one of configurations 6 to 10, wherein the control system provides a user interface configured to output the first state data and the second state data.

### [Configuration 12]

The control system according to any one of configurations 1 to 11, wherein the relay unit is configured to
communicate with a communication master connected to the first transmission path via the first transmission path, and
communicate with the second controller serving as a communication master via the second transmission path.

### [Configuration 13]

A relay device (250) connected to a first controller (100) via a first transmission path (4) and connected to a second controller (200) via a second transmission path (6), the relay device including:
a first interface (270) for connection to the first transmission path;
a second interface (280) for connection to the second transmission path;
a detection unit (271) configured to detect a communication state of the first transmission path; and
a processing circuit (260) configured to, in accordance with a transfer setting (268), transmit, to the second controller, output data transmitted from the first controller, and transmit, to the second controller, first state data (265) indicating the detected communication state of the first transmission path.

### [Configuration 14]

A communication method performed by a control system (1) including a first controller (100) including an interface (120) for connection to a first transmission path (4) and a second controller (200) including an interface (220) for connection to a second transmission path (6), the communication method including:
detecting a communication state of the first transmission path;
transmitting, in accordance with a transfer setting (268), to the second controller, output data transmitted from the first controller; and
transmitting, to the second controller, first state data (265) indicating the communication state of the first transmission path.

It should be understood that the embodiments disclosed herein are illustrative and non-restrictive in every respect. The scope of the present invention is defined by the scope of the claims, rather than the description above, and is intended to include any modifications within the scope and meaning equivalent to the scope of the claims.

### REFERENCE SIGNS LIST

1 control system; 4 field network; 6 internal bus; 10 main controller; 12 cyclic communication band; 14 message communication band; 16, 16A, 16B frame; 18 communication management information; 20 sub-controller; 30 entry number; 31 event code; 32, 352 importance; 33 resolution flag; 34 time data; 35 first time data; 36 second time data; 90 field device; 100, 200 arithmetic unit; 102, 202, 262 processor; 104, 204 chipset; 106, 206, 264 memory; 107, 207 timer; 108, 208, 267 storage; 110, 210 host network interface; 112, 212 interface; 114, 214 memory card interface; 116, 216 memory card; 120, 270 field network interface; 121, 221, 274, 284 receive buffer; 122, 222, 275, 285 transmit buffer; 123, 223, 273, 283 counter; 131, 231 system program; 132, 232 user program; 215 field network controller; 220, 280 internal bus interface; 250 relay unit; 260 processing circuit; 265 occurring event information; 266 record; 268 transfer setting; 269 status information; 271, 281 detection unit; 272, 282 buffer; 287 event log; 288 event management program; 289 time setting; 300 support device; 350 screen; 351 order; 352A type; 353 event name; 354, T1, T2, T3, T4, T5, T6 time; 355 cause; 356 action; 358, 359, 360 button; 400 display; F1, F2, F3, F4, F5 flag.

## Claims

1. A control system comprising:
a first controller including an interface for connection to a first transmission path;
a second controller including an interface for connection to a second transmission path; and
a relay unit including
a first interface for connection to the first transmission path, and
a second interface for connection to the second transmission path,
wherein
the relay unit includes a detection unit configured to detect a communication state of the first transmission path, and
the relay unit is configured to, in accordance with a transfer setting, transmit, to the second controller output data transmitted from the first controller, and transmit, to the second controller, first state data indicating the detected communication state of the first transmission path.

2. The control system according to claim 1, wherein the relay unit is configured to
transmit, to the second controller by cyclic communication, output data transmitted from the first controller by cyclic communication, and
transmit the first state data to the second controller by cyclic communication.

3. The control system according to claim 1 or 2, wherein the relay unit is configured to detect a recovery of the communication state indicated by the first state data.

4. The control system according to claim 3, wherein the relay unit is configured to stop transmitting the first state data after detecting the recovery.

5. The control system according to any one of claim 1 to 4, wherein
the first state data indicates an importance of an action against the detected communication state of the first transmission path, and
the relay unit is configured to transmit, to the second controller by message communication, information indicating details of the detected communication state of the first transmission path.

6. The control system according to any one of claims 1 to 5, wherein
the detection unit is further configured to detect a communication state of the second transmission path, and
the relay unit is further configured to, in accordance with the transfer setting, transmit, to the first controller, output data transmitted from the second controller, and transmit, to the first controller, second state data indicating the detected communication state of the second transmission path.

7. The control system according to claim 6, wherein the relay unit is configured to
transmit, to the first controller by cyclic communication, output data transmitted from the second controller by cyclic communication, and
transmit the second state data to the first controller by cyclic communication.

8. The control system according to claim 6 or 7, wherein the relay unit is configured to detect a recovery of the communication state indicated by the second state data.

9. The control system according to claim 8, wherein the relay unit is configured to stop transmitting the second state data after detecting the recovery of the communication state indicated by the second state data.

10. The control system according to any one of claims 6 to 8, wherein
the second state data indicates an importance of an action against the detected communication state of the second transmission path, and
the relay unit is configured to transmit, to the first controller by message communication, information indicating details of the detected communication state of the second transmission path.

11. The control system according to any one of claims 6 to 10,
wherein the control system provides a user interface configured to output the first state data and the second state data.

12. The control system according to any one of claims 1 to 11,
wherein the relay unit is configured to
communicate with a communication master connected to the first transmission path via the first transmission path, and
communicate with the second controller serving as a communication master via the second transmission path.

13. A relay device connected to a first controller via a first transmission path and connected to a second controller via a second transmission path, the relay device comprising:
a first interface for connection to the first transmission path;
a second interface for connection to the second transmission path;
a detection unit configured to detect a communication state of the first transmission path; and
a processing circuit configured to, in accordance with a transfer setting, transmit, to the second controller, output data transmitted from the first controller, and transmit, to the second controller, first state data indicating the detected communication state of the first transmission path.

14. A communication method performed by a control system including a first controller including an interface for connection to a first transmission path and a second controller including an interface for connection to a second transmission path, the communication method comprising:
detecting a communication state of the first transmission path;
transmitting, in accordance with a transfer setting, to the second controller, output data transmitted from the first controller; and
transmitting, to the second controller, first state data indicating the communication state of the first transmission path.
